# FASCICULE DE BREVET EUROPEEN

(11) **EP 1 849 630 B1**
(45) Date de publication et mention de la délivrance du brevet: **30.06.2010**
(21) Numéro de dépôt: 07106723.5
(22) Date de dépôt: 23.04.2007
(51) Int. Cl.: B60C 23/04

(54) **Support pour organe de contrôle d'un pneumatique, ensemble d'un support et d'un organe de contrôle, pneumatique et roue**
Halterung für Kontrollvorrichtung eines Reifens, Einheit aus einer Halterung und einer Kontrollvorrichtung, Reifen und Rad
Support for a tyre control element, assembly of a support and a control element, tyre and wheel

(30) Priorité: 25.04.2006 FR 0603673
(43) Date de publication de la demande: 31.10.2007
(73) Titulaire: Société de Technologie Michelin, 63000 Clermont-Ferrand (FR); Michelin Recherche et Technique S.A., 1763 Granges-Paccot (CH)
(72) Inventeur: Perrier, Bernard, 63100 Clermont-Ferrand (FR); Penot, Thierry, 63000 Clermont-Ferrand (FR)
(74) Mandataire: Dequire, Philippe Jean-Marie Denis

(56) Documents cités:
- WO-A-99/29524
- DE-U1-202005 005 144
- US-B1- 6 581 657

## Description

La présente invention concerne un support pour organe de contrôle d'un pneumatique, un ensemble d'un support et d'un organe de contrôle d'un pneumatique, un pneumatique et une roue.

On connaît déjà dans l'état de la technique, notamment d'après les documents WO 99/29524 et FR 2 866 895, un support pour organe de contrôle d'un pneumatique, du type destiné à être solidarisé à un ensemble d'une roue et d'un pneumatique et comprenant des moyens de fixation de l'organe.

L'organe de contrôle du pneumatique, qui est par exemple un capteur de pression, un capteur de température ou un dispositif d'identification du pneumatique, est utilisé pour fournir des informations concernant le pneumatique à un calculateur d'un véhicule automobile équipé du pneumatique.

Dans cet état de la technique, le support est solidarisé à la roue par collage, et les moyens de fixation de l'organe au support comprennent des clips ou un logement ménagé dans le support.

Il est important que la force de retenue des moyens de fixation de l'organe soit aisément modifiable de manière à ce que le remplacement d'un organe défectueux ou la fixation d'un nouveau type d'organe au pneumatique soit facile et rapide.

L'invention vise à proposer un support du type précité perfectionné dont les moyens de fixation de l'organe sont rapides et simples d'utilisation.

A cet effet, l'invention a pour objet un support pour organe de contrôle d'un pneumatique du type précité, dans lequel les moyens de fixation ont une force de retenue de l'organe qui est une fonction croissante de la pression du milieu environnant le support.

La force de retenue de l'organe caractérise la force nécessaire pour désolidariser l'organe du support. Lors du montage et du positionnement de l'organe sur le support, il est préférable que la force de retenue soit faible, voire nulle. En revanche, lors de la rotation du pneumatique, il est nécessaire que la force de retenue soit grande pour maintenir fermement l'organe en position sur le support.

Le support selon l'invention et l'organe de contrôle du pneumatique sont destinés à être intégrés à l'intérieur du pneumatique. Ainsi, le milieu environnant le support est de l'air, éventuellement sous pression.

La fixation de l'organe de contrôle sur le support est réalisée lorsque le pneumatique est démonté de la roue, c'est-à-dire lorsque le pneumatique est dégonflé et qu'il est à pression atmosphérique.

Une fois que l'organe de contrôle est positionné correctement sur le support, le pneumatique est monté sur la roue puis il est gonflé à sa pression nominale d'utilisation.

Le gonflage du pneumatique a pour effet d'augmenter la pression régnant à l'intérieur du pneumatique. Ainsi, grâce à l'invention, la force de retenue des moyens de fixation de l'organe sur le support croît et l'organe est fermement solidarisé au support.

La fixation de l'organe sur le support est donc particulièrement simple et rapide puisqu'elle ne nécessite qu'une simple étape de positionnement de l'organe de contrôle sur le support avant de mettre en oeuvre les étapes classiques de montage et de gonflage du pneumatique.

Un support selon l'invention peut en outre comporter l'une ou plusieurs des caractéristiques suivantes.
- Les moyens de fixation sont agencés de manière que lorsque le support est solidarisé à l'ensemble de la roue et du pneumatique, et que la pression du milieu environnant le support est la pression atmosphérique, l'organe peut être introduit dans ou extrait du support.
- Les moyens de fixation comprennent un logement pour l'organe de contrôle ménagé dans le support, le support étant adapté pour que le volume du logement soit d'autant plus faible que la pression du milieu environnant le support est élevée.
- De préférence, à pression atmosphérique, les dimensions du logement sont supérieures aux dimensions de l'organe. Ainsi, lors du montage à pression atmosphérique, il est possible d'insérer l'organe dans le logement puisque leurs dimensions respectives le permettent. Lors du gonflage du pneumatique, le volume du logement diminue et les parois du support viennent au contact de l'organe de contrôle de façon à l'enserrer et à le retenir fermement.
- Le support est réalisé en un matériau dont le volume est une fonction décroissante de la pression, le logement étant ménagé dans la masse du matériau.
- Le support est réalisé en mousse alvéolaire comprenant des alvéoles fermées. Des alvéoles fermées sont des alvéoles étanches et distinctes les unes des autres. On parle également parfois de mousse cellulaire.
- La pression régnant à l'intérieur de chaque alvéole fermée est supérieure à la pression atmosphérique. Ainsi, à pression atmosphérique, les alvéoles de cette mousse sont déployées et la mousse occupe son volume maximal.
- La pression régnant à l'intérieur de chaque alvéole fermée est inférieure à une pression nominale de gonflage du pneumatique, par exemple égale à 2,2 bars. Cela permet qu'au cours du gonflage du pneumatique, la pression du pneumatique dépasse la pression des alvéoles de la mousse, ce qui résulte en une compression des alvéoles. Un tel matériau est donc un exemple de matériau dont le volume varie en fonction de la pression.
- La mousse alvéolaire est réalisée en l'un quelconque des matériaux de l'ensemble constitué par du polyéthylène, du polyuréthane, du polybutadiène 1-2, du polyisobutylène, du caoutchouc butyle, du polyisoprène, du thermoplastique élastomère et un coupage de caoutchouc nitrile et de chlorure de polyvinyle.
- Le support comprend une enveloppe souple emprisonnant un gaz, l'enveloppe souple étant conformée pour que sa surface extérieure définisse le logement pour l'organe de contrôle, la pression du gaz étant de préférence supérieure à la pression atmosphérique et inférieure à une pression nominale de gonflage du pneumatique, par exemple égale à 2,2 bars.
- Les moyens de fixation comprennent :
   o des moyens de retenue de l'organe aptes à adopter une première position de libération de l'organe et une seconde position de retenue de l'organe, et
   o des moyens d'actionnement des moyens de retenue, aptes à faire passer les moyens de retenue d'une position à l'autre, les moyens d'actionnement étant commandés par la pression du milieu environnant le support.
- Les moyens d'actionnement comprennent une masse d'un matériau dont le volume est une fonction décroissante de la pression, le matériau étant par exemple de la mousse alvéolaire comprenant des alvéoles fermées.

L'invention a également pour objet un ensemble d'un support et d'un organe de contrôle d'un pneumatique.

De manière optionnelle, l'organe de contrôle est choisi parmi l'un quelconque des éléments de l'ensemble constitué par un capteur de température, un capteur de pression, un capteur de contraintes, un accéléromètre, un capteur d'hygrométrie, un émetteur, un récepteur, un circuit électronique, un dispositif d'identification.

L'invention a également pour objet un pneumatique comprend un support selon l'invention.

Le support est solidarisé au pneumatique par exemple par collage.

L'invention a également pour objet une roue comprend un support selon l'invention.

Le support est solidarisé à la roue par exemple par collage, visage, encliquetage ou au moyen d'un collier de serrage.

L'invention sera mieux comprise à la lecture de la description qui va suivre, donnée uniquement à titre d'exemple et faite en se référant aux dessins annexés dans lesquels :
- la figure 1 est une demi-vue en coupe axiale d'un ensemble de roue et de pneumatique comprenant un support selon un premier mode de réalisation de l'invention ;
- la figure 2 est un schéma en perspective du support de la figure 1, auquel est fixé un organe de contrôle du pneumatique ;
- la figure 3 est un schéma en coupe de l'ensemble du support et de l'organe de la figure 2, lorsque l'ensemble est à pression atmosphérique ;
- la figure 4 est un schéma en coupe de l'ensemble du support et de l'organe de la figure 2, lorsque l'ensemble est à une pression nominale de gonflage du pneumatique ;
- les figures 5a et 5b sont des schémas en perspective d'un support selon une variante du premier mode de réalisation de l'invention ;
- les figures 6, 7, et 8 sont des schémas en coupe d'un support selon plusieurs variantes d'un second mode de réalisation de l'invention.

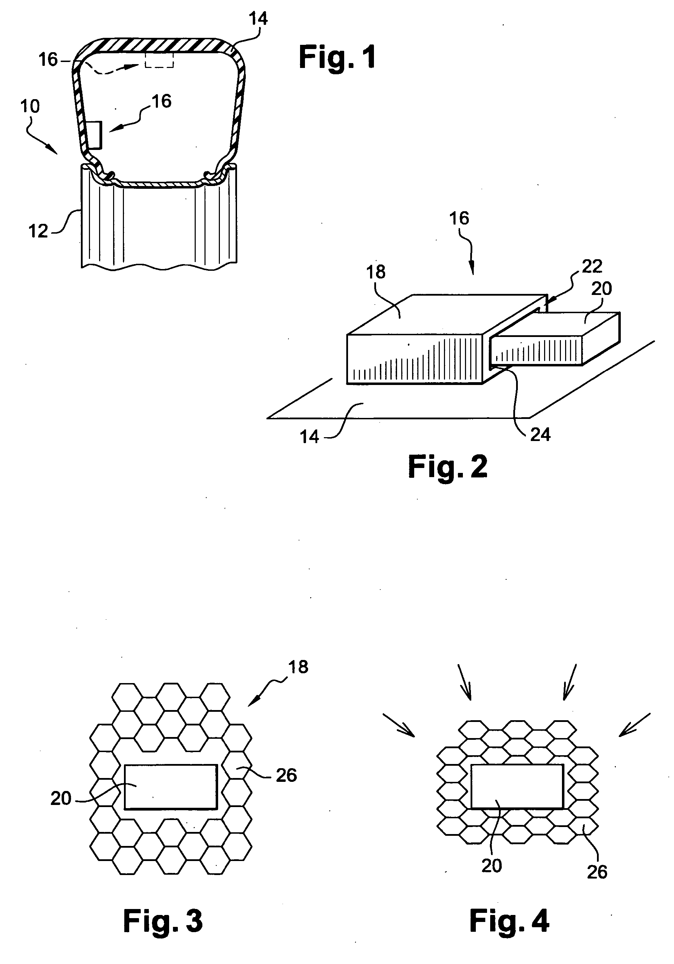

On a représenté sur la figure 1 un ensemble d'une roue et d'un pneumatique, désigné par la référence générale 10.

Cet ensemble 10 est relié à une caisse de véhicule (non représentée) à l'aide de moyens classiques.

De façon classique, l'ensemble 10 comprend une roue métallique 12 sur laquelle est monté un pneumatique 14 destiné à rouler sur le sol.

Un ensemble 16 d'un support 18 et d'un organe 20 de contrôle du pneumatique 14 est solidarisé à la surface interne du pneumatique 14. Le support 18 est solidarisé sur la zone basse du flanc du pneumatique par collage.

Selon une variante représentée en traits pointillés sur la figure 1, le support 18 est positionné sous le sommet du pneumatique. Cette position présente l'avantage que la force centrifuge a moins d'effet sur la fixation du support 18 sur le pneumatique 14. Cela améliore la durée de vie de cette fixation.

Dans l'exemple représenté, l'organe 20 de contrôle du pneumatique 14 est un capteur de pression.

L'ensemble 16 du support 18 selon un premier mode de réalisation et de l'organe 20 de contrôle du pneumatique 14 est représenté plus en détail sur la figure 2.

Le support 18 comprend un logement 22 pour l'organe 20, formant moyens de fixation de l'organe 20 au support 18.

Le logement 22 est constitué par un orifice 24 ménagé dans la masse du support 18 et débouchant sur l'une de ses faces.

Sur la figure 2, l'organe 20 est partiellement inséré dans le logement 22 du support 18.

Le support 18 est réalisé en une mousse alvéolaire comprenant des alvéoles fermées 26, comme cela est schématisé sur les figures 3 et 4.

La mousse alvéolaire utilisée pour concevoir le support 18 est de préférence du caoutchouc butyle, qui est un matériau compatible avec la gomme du pneumatique 14.

La mousse alvéolaire du support 18 est telle que la pression régnant à l'intérieur de chaque alvéole 26 est supérieure à la pression atmosphérique et inférieure à une pression nominale de gonflage du pneumatique 14, par exemple inférieure à 2,2 bars.

Ainsi, à pression atmosphérique, les alvéoles sont au repos et le volume du support 18 est maximal. Un tel état est représenté sur la figure 3.

Lorsque le support 18 est soumis à une pression supérieure à la pression régnant à l'intérieur de chaque alvéole 26, par exemple à une pression nominale de gonflage du pneumatique, les alvéoles 26 sont dans un état comprimé et le support 18 occupe un volume réduit comme cela est visible sur la figure 4.

Le support 18 et son logement 22 sont dimensionnés de sorte qu'au repos, c'est-à-dire à pression atmosphérique, les dimensions du logement 24 sont supérieures aux dimensions de l'organe 20.

Ainsi, à pression atmosphérique, il est possible d'insérer l'organe 20 dans le logement 22 du support 18. Le logement 22 constitue donc des moyens de fixation de l'organe 20 dont la force de retenue est faible à pression atmosphérique.

On va décrire par la suite le procédé de fixation de l'organe de contrôle 20 sur le pneumatique 14, par l'intermédiaire du support 18 qui est solidarisé au pneumatique.

Lorsque le pneumatique 14 est démonté de la roue 12, le support 18 fixé à l'intérieur du pneumatique 14 est à pression atmosphérique.

Grâce à la mousse alvéolaire, les alvéoles 26 sont expansées à pression atmosphérique et le volume du logement 22 est suffisamment grand pour permettre l'insertion de l'organe de contrôle 20.

II est donc très facile d'insérer l'organe 20 dans le logement 22 du support 18 lorsque le pneumatique 14 est démonté.

Ensuite, on monte le pneumatique 14 sur la roue 12 et on le gonfle.

Le gonflage du pneumatique 14 permet d'augmenter la pression régnant à l'intérieur du pneumatique 14 jusqu'à ce que cette pression dépasse la valeur de la pression régnant à l'intérieur des alvéoles 26.

A mesure que la pression du pneumatique augmente, les alvéoles 26 sont comprimées et le volume du logement 22 diminue.

Ainsi, et comme représenté sur la figure 4, le matériau du support 18 vient progressivement au contact de l'organe 20 et l'enserre. La force de retenue de l'organe croît donc à mesure que la pression de l'air environnant le support augmente.

En outre, le matériau du support 18 tend à épouser la forme générale de l'organe de contrôle 20 ce qui permet une bonne répartition des efforts engendrés par le support 18 sur l'organe 20 et une bonne protection de l'organe.

Une fois que la pression du pneumatique 14 est sensiblement égale à la pression nominale de gonflage, par exemple à 2,2 bars, l'organe 20 est solidement fixé sur le support 18.

Lorsque la mousse alvéolaire du support 18 est comprimée au maximum, l'épaisseur de la mousse est sensiblement égale à l'épaisseur des parois des alvéoles 26.

Ce mode de fixation présente en outre l'avantage d'absorber les vibrations créées par la rotation du pneumatique 14 puisque la mousse alvéolaire constituant le support 18 est un matériau souple qui amortit les vibrations.

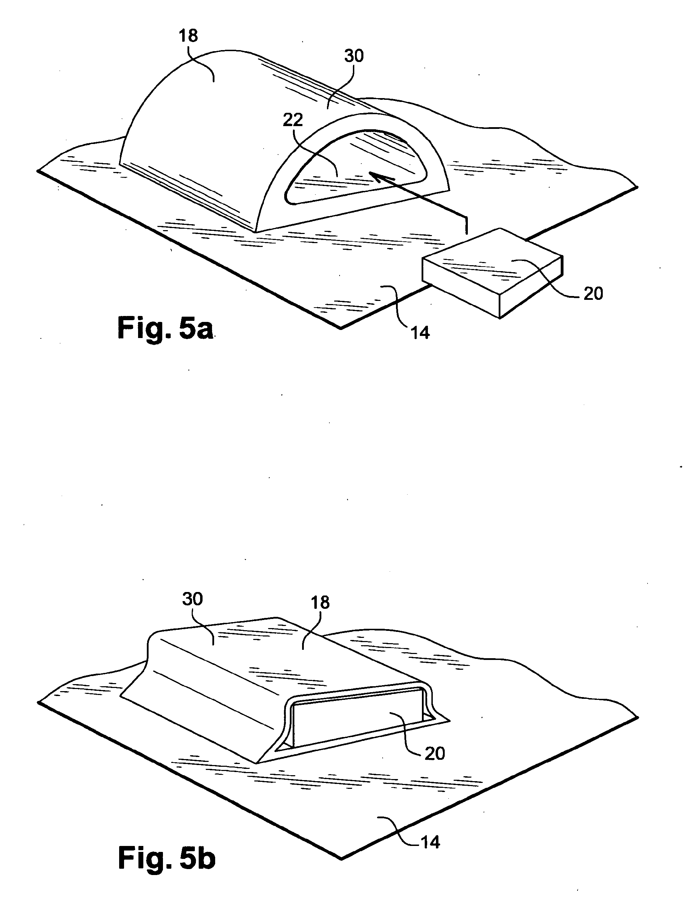

Les figures 5a et 5b représentent un support 18 selon une variante du premier mode de réalisation de l'invention.

Le support 18 comprend une enveloppe souple 30 emprisonnant un gaz. L'enveloppe souple 30 est conformée pour que sa surface extérieure définisse le logement 22 pour l'organe 20 de contrôle.

La pression du gaz emprisonné dans l'enveloppe 30 est supérieure à la pression atmosphérique et inférieure à une pression nominale de gonflage du pneumatique.

Ainsi, à pression atmosphérique, l'enveloppe souple est gonflée sous l'effet du gaz et le logement 22 est accessible, comme représenté sur la figure 5a. Il est donc possible d'insérer l'organe 20 dans le logement 22.

Lorsque le support 18 est sous pression, l'enveloppe souple est comprimée et épouse sensiblement la forme de l'organe 20, comme représenté sur la figure 5b.

Selon un second mode de réalisation du support, les moyens de fixation de l'organe 20 au support 18 comprennent :
- des moyens 32 de retenue de l'organe 20 aptes à adopter une première position de libération de l'organe et une seconde position de retenue de l'organe 20, et
- des moyens 34 d'actionnement des moyens 32 de retenue, aptes à faire passer les moyens de retenue 32 d'une position à l'autre, les moyens d'actionnement 34 étant commandés par la pression du milieu environnant le support 18.

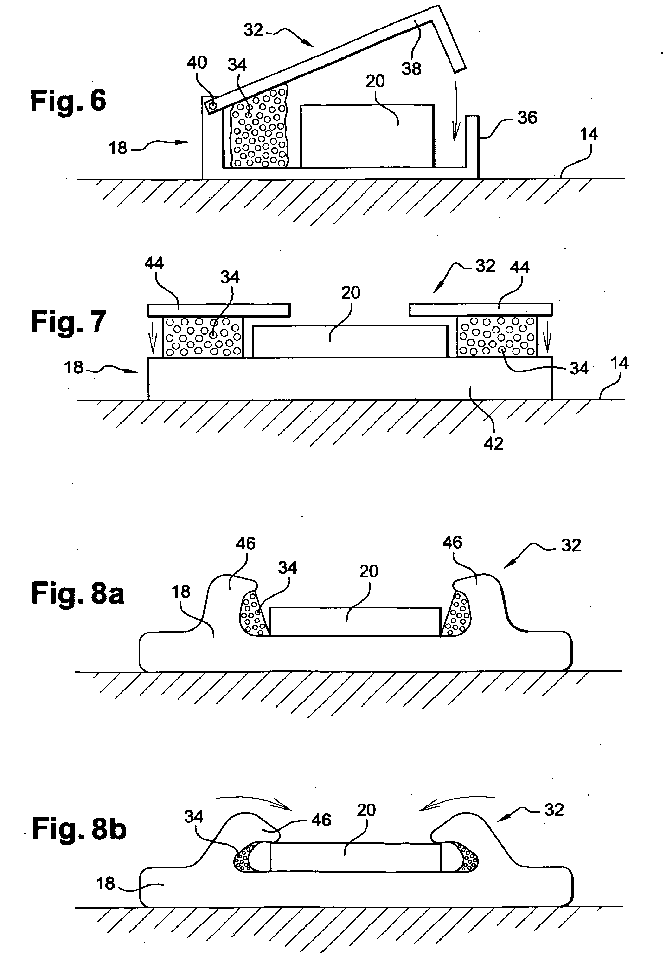

Selon une première variante de ce second mode de réalisation, représentée sur la figure 6, le support 18 comprend un boîtier rigide 36 d'accueil de l'organe et un couvercle 38 formant moyens 32 de retenue et lié au boîtier 36 par l'intermédiaire d'une charnière 40.

Le couvercle 38 est apte à adopter une première position ouverte de libération de l'organe et une seconde position fermée de retenue de l'organe 20.

Les moyens 34 d'actionnement du couvercle 38 comprennent une masse de mousse alvéolaire comprenant des alvéoles fermées, la masse étant liée à la fois au fond du boîtier 36 et à la surface inférieure du couvercle 38.

Ainsi, lorsque la masse de mousse alvéolaire est mise sous pression, elle se contracte et agit comme une force de rappel du couvercle 38 depuis sa position ouverte vers sa position fermée, comme symbolisé par une flèche sur la figure 6.

Selon une deuxième variante du second mode de réalisation, représentée sur la figure 7, le support 18 comprend un socle 42 sur lequel est posé l'organe 20 et deux pattes 44 formant moyens 32 de retenue destinées à serrer l'organe 20 contre le socle 42.

Chaque patte 44 est liée au socle 42 par l'intermédiaire d'une masse de mousse alvéolaire comprenant des alvéoles fermées formant moyens 34 d'actionnement des moyens 32 de retenue.

Ainsi, lorsque la masse de mousse alvéolaire est mise sous pression, elle se contracte et agit comme une force de rappel de la patte 44 vers le socle 42, comme symbolisé par des flèches sur la figure 7.

Selon une troisième variante du second mode de réalisation, représentée sur la figure 8, le support 18 est réalisé en un matériau souple mais non compressible.

Le support 18 comprend des saillies 46 formant moyens 32 de retenue de l'organe 20. Les saillies 46 ont une forme de griffes destinées à enserrer l'organe 20.

Etant donné que les griffes 46 sont souples, la distance qui les sépare peut varier si bien qu'elles sont aptes à adopter une première position écartée (représentée sur la figure 8a), de libération de l'organe 20 et une seconde position serrée (représentée sur la figure 8b), de retenue de l'organe 20.

Une masse de mousse alvéolaire formant moyens 34 d'actionnement des griffes 46 est portée par la surface de chaque griffe orientée vers l'organe 20.

Ainsi, lorsque les masses de mousse alvéolaire sont mises sous pression, elles se contractent et tendent à faire plier les griffes selon les directions symbolisées par des flèches sur la figure 8b.

Comme le matériau composant les saillies 46 est incompressible, elles ne se contractent pas et conservent une forme générale de griffe.

## Revendications

1. Support (18) pour organe (20) de contrôle d'un pneumatique (14), du type destiné à être solidarisé à un ensemble (16) d'une roue (12) et d'un pneumatique (14) et comprenant des moyens (22) de fixation de l'organe (20), dans lequel les moyens (22) de fixation ont une force de retenue de l'organe (20) qui est une fonction croissante de la pression du milieu de l'air environnant le support (18), **caractérisé en ce que** les moyens (22) de fixation sont agencés de manière que lorsque le support (18) est solidarisé à l'ensemble (16) de la roue (12) et du pneumatique (14), et que la pression du milieu environnant le support (18) est la pression atmosphérique, l'organe (20) peut être introduit dans ou extrait du support (18).

2. Support (18) selon la revendication 1 , dans lequel les moyens (22) de fixation comprennent un logement (22) pour l'organe (20) de contrôle ménagé dans le support (18), le support (18) étant adapté pour que le volume du logement (22) soit d'autant plus faible que la pression du milieu environnant le support (18) est élevée.

3. Support (18) selon la revendication 2, dans lequel, à pression atmosphérique, les dimensions du logement (22) sont supérieures aux dimensions de l'organe (20).

4. Support (18) selon la revendication 2 ou 3, réalisé en un matériau dont le volume est une fonction décroissante de la pression, le logement (22) étant ménagé dans la masse du matériau.

5. Support (18) selon la revendication 4, réalisé en mousse alvéolaire comprenant des alvéoles fermées (26).

6. Support (18) selon la revendication 5, dans lequel la pression régnant à l'intérieur de chaque alvéole fermée (26) est supérieure à la pression atmosphérique.

7. Support (18) selon la revendication 6, dans lequel la pression régnant à l'intérieur de chaque alvéole fermée (26) est inférieure à une pression nominale de gonflage du pneumatique (14), par exemple égale à 2,2 bars.

8. Support (18) selon l'une quelconque des revendications 5 à 7, dans lequel la mousse alvéolaire est réalisée en l'un quelconque des matériaux de l'ensemble constitué par du polyéthylène, du polyuréthane, du polybutadiène 1-2, du polyisobutylène, du polyisoprène, du caoutchouc butyle, du thermoplastique élastomère et un coupage de caoutchouc nitrile et de chlorure de polyvinyle.

9. Support (18) selon la revendication 2 ou 3, comprenant une enveloppe souple (30) emprisonnant un gaz, l'enveloppe souple (30) étant conformée pour que sa surface extérieure définisse le logement (22) pour l'organe (20) de contrôle, la pression du gaz étant de préférence supérieure à la pression atmosphérique et inférieure à une pression nominale de gonflage du pneumatique (14), par exemple égale à 2,2 bars.

10. Support (18) selon l'une quelconque des revendications précédentes, dans lequel les moyens de fixation comprennent :
- des moyens (32) de retenue de l'organe aptes à adopter une première position de libération de l'organe (20) et une seconde position de retenue de l'organe, et
- des moyens (34) d'actionnement des moyens de retenue (32), aptes à faire passer les moyens de retenue (32) d'une position à l'autre, les moyens (34) d'actionnement étant commandés par la pression du milieu environnant le support (18).

11. Support (18) selon la revendication 10, dans lequel les moyens d'actionnement (34) comprennent une masse d'un matériau dont le volume est une fonction décroissante de la pression, le matériau étant par exemple de la mousse alvéolaire comprenant des alvéoles fermées (26).

12. Ensemble (16) d'un support (18) et d'un organe de contrôle (20) d'un pneumatique (14), **caractérisé en ce que** le support est selon l'une quelconque des revendications 1 à 11.

13. Ensemble (16) selon la revendication 12, dans lequel l'organe (20) est choisi parmi l'un quelconque des éléments de l'ensemble constitué par un capteur de température, un capteur de pression, un capteur de contraintes, un accéléromètre, un capteur d'hygrométrie, un émetteur, un récepteur, un circuit électronique, un dispositif d'identification.

14. Pneumatique (14) **caractérisé en ce qu'**il comprend un support (18) selon l'une quelconque des revendications 1 à 11.

15. Roue (12) **caractérisée en ce qu'**elle comprend un support (18) selon l'une quelconque des revendications 1 à 11.

## Claims

1. Support (18) for a component (20) for monitoring a tyre (14), of the type intended to be secured to a wheel (12) and tyre (14) system (16) and comprising means (22) of securing the component (20), the securing means (22) having a component (20) retaining force which is an increasing function of the pressure of the air of the medium surrounding the support (18), **characterized in that** the securing means (22) are arranged in such a way that, when the support (18) is secured to the wheel (12) and tyre (14) system (16), and when the pressure of the medium surrounding the support (18) is the atmospheric pressure, the component (20) can be introduced in or extracted from the support (18).

2. Support (18) according to Claim 1, in which the securing means (22) comprise a housing (22) for the monitoring component (20), formed in the support (18), the support (18) being designed so that the higher the pressure of the medium surrounding the support (18), the smaller the volume of the housing (22).

3. Support (18) according to Claim 2, in which, at atmospheric pressure, the dimensions of the housing exceed the dimensions of the component.

4. Support (18) according to Claim 2 or 3, made of a material the volume of which is a decreasing function of pressure, the housing (22) being formed in the mass of the material.

5. Support (18) according to Claim 4, made of cellular foam comprising closed cells (26).

6. Support (18) according to Claim 5, in which the pressure obtaining inside each closed cell (26) exceeds atmospheric pressure.

7. Support (18) according to Claim 6, in which the pressure obtaining inside each closed cell (26) is below a nominal tyre (14) inflation pressure, for example equal to 2.2 bar.

8. Support (18) according to any one of Claims 5 to 7, in which the cellular foam is made of any one of the materials from the set consisting of polyethylene, polyurethane, 1,2-polybutadiene, polyisobutylene, polyisoprene, butyl rubber, thermoplastic elastomer and a blend of nitrile rubber and polyvinyl chloride.

9. Support (18) according to Claim 2 or 3, comprising a flexible envelope (30) enclosing a gas, the flexible envelope (30) being shaped such that its exterior surface defines the housing (22) for the monitoring component (20), the gas pressure preferably exceeding atmospheric pressure and being below a nominal tyre (14) inflation pressure, for example equal to 2.2 bar.

10. Support (18) according to any one of the previous Claims, in which the securing means comprise:
- component retaining means (32) able to adopt a first position in which they release the component (20) and a second position in which they retain the component, and
- means (34) for actuating the retaining means (32), which are able to cause the retaining means (32) to switch from one position to the other, the actuating means (34) being operated by the pressure of the medium surrounding the support.

11. Support (18) according to Claim 10, in which the actuating means (34) comprise a mass of a material the volume of which is a decreasing function of pressure, the material for example being cellular foam comprising closed cells (26) .

12. Support (18) and tyre monitoring component (20) system (16), **characterized in that** the support is according to any one of Claims 1 to 11.

13. System (16) according to Claim 12, in which the component (20) is chosen from any one of the elements of the set consisting of a temperature sensor, a pressure sensor, a strain gauge, an accelerometer, a relative humidity sensor, an emitter, a receiver, an electronic circuit, an identification device.

14. Tyre (14) **characterized in that** it comprises a support (18) according to any one of Claims 1 to 11.

15. Wheel (12) **characterized in that** it comprises a support (18) according to any one of Claims 1 to 11.

## Patentansprüche

1. Halter (18) für Organ (20) zur Kontrolle eines Luftreifens (14), der von dem Typ ist, der dazu bestimmt ist, mit einer Einheit (16) aus einem Rad (12) und einem Luftreifen (14) fest verbunden zu werden, und versehen ist mit Mitteln (22) zum Befestigen des Organs (20), wobei die Befestigungsmittel (22) eine Kraft zum Halten des Organs (20) haben, die eine zunehmende Funktion des Drucks des den Halter (18) umgebenden Luftmediums ist, **dadurch gekennzeichnet, dass** die Befestigungsmittel (22) in der Weise beschaffen sind, dass dann, wenn der Halter (18) mit der Einheit (16) aus dem Rad (12) und dem Luftreifen (14) fest verbunden ist und wenn der Druck des den Halter (18) umgebenden Mediums der Atmosphärendruck ist, das Organ (20) in den Halter (18) eingesetzt oder aus ihm entnommen werden kann.

2. Halter (18) nach Anspruch 1, wobei die Befestigungsmittel (22) einen Aufnahmesitz (22) für das Kontrollorgan (20) aufweisen, der in dem Halter (18) ausgebildet ist, wobei der Halter (18) so beschaffen ist, dass das Volumen des Aufnahmesitzes (22) umso kleiner ist, je höher der Druck des den Halter (18) umgebenden Mediums ist.

3. Halter (18) nach Anspruch 2, wobei die Abmessungen des Aufnahmesitzes (22) unter Atmosphärendruck größer als die Abmessungen des Organs (20) sind.

4. Halter (18) nach Anspruch 2 oder 3, der aus einem Material hergestellt ist, dessen Volumen eine abnehmende Funktion des Drucks ist, wobei der Aufnahmesitz (22) in der Masse des Materials ausgebildet ist.

5. Halter (18) nach Anspruch 4, der aus einem zellenförmigen Schaumstoff hergestellt ist, der geschlossene Zellen (26) enthält.

6. Halter (18) nach Anspruch 5, wobei der Druck, der in jeder geschlossenen Zelle (26) herrscht, größer als der Atmosphärendruck ist.

7. Halter (18) nach Anspruch 6, wobei der Druck, der in jeder geschlossenen Zelle (26) herrscht, kleiner als ein Nenn-Fülldruck des Luftreifens (14), beispielsweise gleich 2,2 Bar, ist.

8. Halter (18) nach einem der Ansprüche 5 bis 7, wobei der zellenförmige Schaumstoff aus irgendeinem Material aus der Gesamtheit hergestellt ist, die gebildet ist aus Polyethylen, Polyurethan, Polybutadien 1-2, Polyisobutylen, Polyisopren, Butyl-Kautschuk, thermoplastischem Polymer und einem Verschnitt aus Nitril-Kautschuk und Polyvinylchlorid.

9. Halter (18) nach Anspruch 2 oder 3, der eine nachgiebige Hülle (30) aufweist, die ein Gas einschließt, wobei die nachgiebige Hülle (30) so beschaffen ist, dass ihre äußere Oberfläche den Aufnahmesitz (22) für das Kontrollorgan (20) definiert, wobei der Druck des Gases vorzugsweise größer als der Atmosphärendruck und kleiner als der Nenn-Fülldruck des Luftreifens (14), beispielsweise gleich 2,2 Bar, ist.

10. Halter (18) nach einem der vorhergehenden Ansprüche, wobei die Befestigungsmittel enthalten:
- Mittel (32) zum Halten des Organs, die dazu ausgelegt sind, eine erste Position für die Freigabe des Organs (20) und eine zweite Position zum Halten des Organs einzunehmen, und
- Mittel (34) zum Betätigen der Haltemittel (32), die dazu ausgelegt sind, die Haltemittel (32) von einer Position in die andere übergehen zu lassen, wobei die Betätigungsmittel (34) durch den Druck des den Halter (18) umgebenden Mediums gesteuert werden.

11. Halter (18) nach Anspruch 10, wobei die Betätigungsmittel (34) eine Masse aus einem Material aufweisen, dessen Volumen eine abnehmende Funktion des Drucks ist, wobei das Material beispielsweise der zellenförmige Schaumstoff ist, der geschlossene Zellen (26) enthält.

12. Anordnung (16) aus einem Halter (18) und einem Kontrollorgan (20) für einen Luftreifen (14), **dadurch gekennzeichnet, dass** der Halter ein Halter nach einem der Ansprüche 1 bis 11 ist.

13. Anordnung (16) nach Anspruch 12, wobei das Organ (20) aus einem der Elemente der Gesamtheit gewählt ist, die gebildet ist durch einen Temperatursensor, einen Drucksensor, einen Beanspruchungssensor, einen Beschleunigungsmesser, einen hygrometrischen Sensor, einen Sender, einen Empfänger, eine elektronische Schaltung und eine Identifizierungsvorrichtung.

14. Luftreifen (14), **dadurch gekennzeichnet, dass** er einen Halter (18) nach einem der Ansprüche 1 bis 11 enthält.

15. Rad (12), **dadurch gekennzeichnet, dass** es einen Halter (18) nach einem der Ansprüche 1 bis 11 enthält.
